# EUROPEAN PATENT APPLICATION

(11) **EP 4 723 595 A1**
(43) Date of publication of application: **08.04.2026**
(21) Application number: 24844257.6
(22) Date of filing: 26.03.2024
(51) Int. Cl.: H04L 65/65

(54) **METHOD AND APPARATUS FOR TRANSMITTING AVS3 VIDEO CODE STREAM**

(30) Priority: 24.07.2023 CN 202310911325
(71) Applicant: ZTE CORPORATION, Shenzhen, Guangdong 518057 (CN)
(72) Inventor: LI, Qiuting, Shenzhen, Guangdong 518057 (CN); HUANG, Cheng, Shenzhen, Guangdong 518057 (CN)
(74) Representative: Mozzi, Matteo
(86) International application number: PCT/CN2024/083848
(87) International publication number: WO 2025/020560

(57) **Abstract**

Provided in the embodiments of the present disclosure are a method and apparatus for transmitting an AVS3 video code stream. The method comprises: encapsulating an AVS3 video code stream into a plurality of real-time transport protocol (RTP) packets, wherein each RTP packet is provided therein with an AVS3 load head and an AVS3 load; and successively transmitting the plurality of RTP packets in the order of encapsulation.

## Description

### Technical Field

Embodiments of the present disclosure relate to the field of communication technologies, and in particular, to a method and apparatus for transmitting a third-generation Audio Video Coding Standard Workgroup of China (AVS3) video coding bitstream.

### Background

A video coding bitstream of the third-generation Audio Video Coding Standard Workgroup of China (AVS3) is usually transmitted by means of Transport Stream (TS), Dynamic Adaptive Streaming over HTTP (DASH), etc. However, with the development of real-time interactive audio and video technologies, AVS3 needs to support a Real-time Transport Protocol (RTP) transmission mode as soon as possible to meet different transmission requirements in different services.

### Summary

The embodiments of the present disclosure provide a method and apparatus for transmitting an AVS3 video coding bitstream, which may at least solve a problem in the related art that an AVS3 video coding bitstream needs to support an RTP transmission mode as soon as possible.

According to an embodiment of the present disclosure, a method for transmitting an AVS3 video coding bitstream is provided, including: encapsulating the AVS3 video coding bitstream into a plurality of Real-time Transport Protocol (RTP) packets, wherein each of the plurality of RTP packets is provided with an AVS3 payload header and an AVS3 payload; and sequentially transmitting the plurality of RTP packets in an order of encapsulation.

According to another embodiment of the present disclosure, an apparatus for transmitting an AVS3 video coding bitstream is provided, including: an encapsulation module, configured to encapsulate the AVS3 video coding bitstream into a plurality of Real-time Transport Protocol (RTP) packets, wherein each of the plurality of RTP packets is provided with an AVS3 payload header and an AVS3 payload; and a transmission module, configured to sequentially transmit the plurality of RTP packets in an order of encapsulation.

According to yet another embodiment of the present disclosure, a computer-readable storage medium is further provided, where a computer program is stored in the computer-readable storage medium, and the computer program is configured to implement operations in any one of the foregoing method embodiments when running.

According to still another embodiment of the present disclosure, an electronic device is further provided, including a memory and a processor, where a computer program is stored in the memory, and the processor is configured to run the computer program to execute operations in any one of the foregoing method embodiments.

Through the foregoing embodiments of the present disclosure, the AVS3 video coding bitstream is encapsulated into a plurality of RTP packets, so that the AVS3 video coding bitstream can be transmitted in the RTP transmission mode. Therefore, the problem that the AVS3 video coding bitstream needs to support the RTP transmission mode as soon as possible can be solved. Meanwhile, the AVS3 payload header is set in the RTP packet, which can be used to indicate relevant feature information and key information in the AVS3 video coding bitstream, facilitating efficient and real-time transmission of the AVS3 video coding bitstream.

### Brief Description of the Drawings

FIG. 1 is a block diagram of a hardware structure of a computer terminal running the method for transmitting an AVS3 video coding bitstream according to an embodiment of the present disclosure;
FIG. 2 is a network architecture diagram of a system for transmitting an AVS3 video coding bitstream according to an embodiment of the present disclosure;
FIG. 3 is a flowchart of a method for transmitting an AVS3 video coding bitstream according to an embodiment of the present disclosure;
FIG. 4 is a block diagram of a structure of an apparatus for transmitting an AVS3 video coding bitstream according to an embodiment of the present disclosure;
FIG. 5 is a schematic diagram of a structure of an AVS3 video coding bitstream according to an embodiment of the present disclosure;
FIG. 6 is a flowchart of a method for encapsulation and transmission of an AVS3 video coding bitstream based on RTP according to an embodiment of the present disclosure;
FIG. 7 is a schematic diagram of an RTP header according to an embodiment of the present disclosure;
FIG. 8 is a schematic diagram of an AVS3 payload header according to an embodiment of the present disclosure;
FIG. 9 is a schematic diagram of an AVS3 common header according to an embodiment of the present disclosure;
FIG. 10 is a schematic diagram of a simplified AVS3 common header according to an embodiment of the present disclosure;
FIG. 11 is a schematic diagram of encapsulation of an RTP packet in a single encapsulation mode according to an embodiment of the present disclosure;
FIG. 12 is a schematic diagram of an RTP packet including a header extension in a single encapsulation mode according to an embodiment of the present disclosure;
FIG. 13 is a schematic diagram of a header extension of an RTP packet in a single encapsulation mode according to an embodiment of the present disclosure;
FIG. 14 is a flowchart of encapsulating an AVS3 video coding bitstream in a single encapsulation mode according to an embodiment of the present disclosure;
FIG. 15 is a schematic diagram of encapsulation of an RTP packet in a combined encapsulation mode according to an embodiment of the present disclosure;
FIG. 16 is a schematic diagram of a header extension of an RTP packet in a combined encapsulation mode according to an embodiment of the present disclosure;
FIG. 17 is a flowchart of encapsulating an AVS3 video coding bitstream in a combined encapsulation mode according to an embodiment of the present disclosure;
FIG. 18 is a schematic diagram of adding indication information of a data unit length according to an embodiment of the present disclosure;
FIG. 19 is a schematic diagram of encapsulation of an RTP packet in a fragmentation encapsulation mode according to an embodiment of the present disclosure;
FIG. 20 is a schematic diagram of an AVS3 header extension in a fragmentation encapsulation mode according to an embodiment of the present disclosure;
FIG. 21 is a flowchart of encapsulating an AVS3 video coding bitstream in a fragmentation encapsulation mode according to an embodiment of the present disclosure;
FIG. 22 is a flowchart of encapsulating an AVS3 video coding bitstream in a same-type encapsulation mode according to an embodiment of the present disclosure; and
FIG. 23 is a flowchart of a method for decoding RTP packets according to an embodiment of the present disclosure.

### Detailed Description of the Embodiments

Hereinafter, the embodiments of the present disclosure will be described in detail with reference to the accompanying drawings and embodiments.

It should be noted that the terms "first", "second", etc. in the specification, claims, and the foregoing accompanying drawings of the present disclosure are used to distinguish similar objects, and are not necessarily used to describe a specific order or sequence.

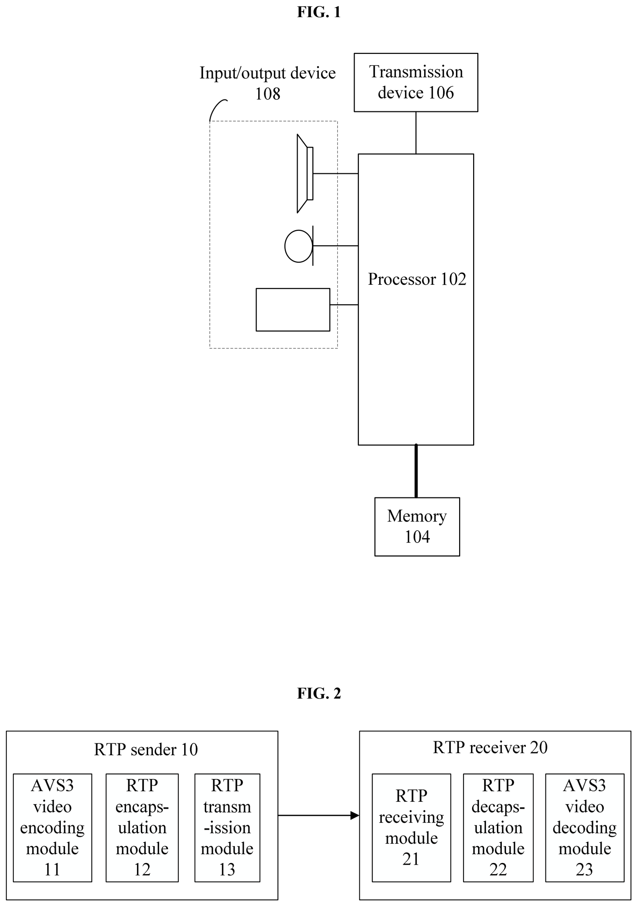

The method embodiments provided in the embodiments of the present application may be executed in a mobile terminal, a computer terminal, or a similar computing device. Taking the running on a computer terminal as an example, FIG. 1 is a block diagram of a hardware structure of a computer terminal running the method for transmitting an AVS3 video coding bitstream according to an embodiment of the present disclosure. As shown in FIG. 1, the computer terminal may include one or more (only one is shown in FIG. 1) processors 102 (each of the one or more processors 102 may include but is not limited to a processing device such as a microprocessor (e.g., a Micro-Controller Unit (MCU)) or a programmable logic device (e.g., a Field Programmable Gate Array (FPGA))) and a memory 104 configured to store data. In addition, the foregoing computer terminal may further include a transmission device 106 configured to have a communication function and an input/output device 108. Those having ordinary skill in the art may understand that the structure shown in FIG. 1 is only schematic and does not limit the structure of the foregoing computer terminal. For example, the computer terminal may further include more or fewer components than those shown in FIG. 1, or have a different configuration from that shown in FIG. 1.

The memory 104 may be configured to store a computer program, for example, a software program and a module of application software, such as a computer program corresponding to the method for transmitting an AVS3 video coding bitstream in the embodiments of the present disclosure. The one or more processors 102 execute various functional applications and data processing by running the computer program stored in the memory 104, that is, implement the foregoing method. The memory 104 may include a high-speed random access memory, and may further include a non-volatile memory, such as one or more magnetic storage devices, flash memories, or other non-volatile solid-state memories. In some examples, the memory 104 may further include a memory remotely disposed relative to the one or more processors 102, and this remote memory may be connected to the computer terminal through a network. Examples of the foregoing network include but are not limited to the Internet, an intranet, a local area network, a mobile communication network, and combinations thereof.

The transmission device 106 is configured to receive or send data via a network. Specific examples of the foregoing network may include a wireless network provided by a communication provider of the computer terminal. In an example, the transmission device 106 includes a Network Interface Controller (NIC), which can be connected to other network devices through a base station to communicate with the Internet. In an example, the transmission device 106 may be a Radio Frequency (RF) module, configured to communicate with the Internet in a wireless manner.

The embodiment of the present application may run on the network architecture shown in FIG. 2. As shown in FIG. 2, the network architecture includes: an RTP sender 10 and an RTP receiver 20. RTP is a commonly used real-time multimedia transmission protocol, which can provide end-to-end real-time transmission services for various real-time multimedia data such as voice and pictures on the Internet Protocol (IP) network. Meanwhile, RTP is also widely used in communication and entertainment related to streaming media.

As shown in FIG. 2, the RTP sender 10 includes: an AVS3 video encoding module 11, an RTP encapsulation module 12, and an RTP transmission module 13.

The AVS3 video encoding module 11, that is, an AVS3 video encoder, is configured to encode original video according to the AVS3 standard to generate an AVS3 video coding bitstream. The original video includes but is not limited to one of the following: video collected by a camera, or video generated by a computer.

The RTP encapsulation module 12 is configured to encapsulate the generated AVS3 video coding bitstream into RTP packets. The AVS3 video coding bitstream needs to be split according to a certain length (that is, the size of data volume) to ensure that the length of each of a plurality of RTP packets (that is, the size of the RTP packet) does not exceed a limit value.

The RTP transmission module 13 is configured to transmit the RTP packets carrying the AVS3 video coding bitstream to the RTP receiver 20.

As shown in FIG. 2, the RTP receiver 20 includes: an RTP receiving module 21, an RTP decapsulation module 22, and an AVS3 video decoding module 23.

The RTP receiving module 21 is configured to receive the RTP packets carrying the AVS3 video coding bitstream transmitted by the RTP transmission module 13.

The RTP decapsulation module 22 is configured to decapsulate the RTP packets received by the RTP receiving module 21 and extract the AVS3 video coding bitstream data carried in the RTP packets.

The AVS3 video decoding module 23, that is, an AVS3 video decoder, is configured to decode the AVS3 video coding bitstream data extracted by the RTP decapsulation module 22.

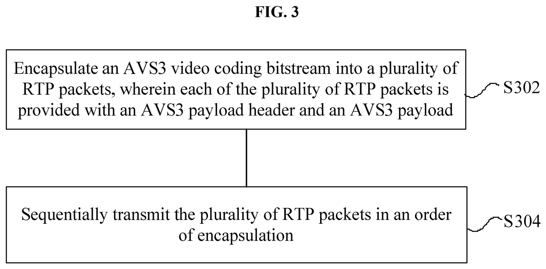

In this embodiment, a method for transmitting an AVS3 video coding bitstream running on the foregoing computer terminal or network architecture is provided. FIG. 3 is a flowchart of a method for transmitting an AVS3 video coding bitstream according to an embodiment of the present disclosure. As shown in FIG. 3, the process includes the following operations S302 and S304.

In operation S302, the AVS3 video coding bitstream is encapsulated into a plurality of Real-time Transport Protocol (RTP) packets, wherein each of the plurality of RTP packets is provided with an AVS3 payload header and an AVS3 payload.

In operation S302 of this embodiment, encapsulating the AVS3 video coding bitstream into the plurality of RTP packets includes: dividing the AVS3 video coding bitstream into a plurality of data units according to start codes in the AVS3 video coding bitstream; and encapsulating the plurality of data units into the plurality of RTP packets, wherein each of the plurality of RTP packets carries one data unit, a plurality of data units, and/or partial data of one or more data units.

In an embodiment, encapsulating the plurality of data units into the plurality of RTP packets includes at least one of: using a first encapsulation mode to encapsulate one data unit into one RTP packet; using a second encapsulation mode to encapsulate a plurality of data units of a same data type or of different data types into one RTP packet; using a third encapsulation mode to encapsulate partial data of one data unit into one RTP packet; using a fourth encapsulation mode to encapsulate all data and/or partial data of one or more data units of the same data type into one RTP packet.

In an embodiment, the AVS3 payload header includes an AVS3 common header, and information indicated by the AVS3 common header includes at least one of: discard indication, temporal Identification (ID), a payload type, library picture indication, library picture extension, extension indication, or encapsulation type indication.

In an embodiment, using the first encapsulation mode to encapsulate one data unit into one RTP packet includes: in a case where a length of one data unit to be encapsulated (that is, the size of the data unit) is less than or equal to an AVS3 video code data load capacity of the RTP packet, encapsulating the data unit alone into one RTP packet.

For video coding bitstreams generated by different encoders (such as H.264, VP8, etc.), the RTP protocol needs to be extended to indicate some basic feature information and key information in the coding stream, so as to meet the efficient and real-time transmission requirements of different coding stream features.

In an embodiment, in the RTP packet obtained by using the second encapsulation mode, the AVS3 payload header of the RTP packet includes an AVS3 header extension, and information indicated by the AVS3 header extension includes at least one of: reference frame picture indication, key parameter indication, heterogeneous data indication, patch data indication, and the number of picture frames.

In an embodiment, using the second encapsulation mode to encapsulate the plurality of data units of the same data type or of different data types into one RTP packet includes: in a case where a sum of lengths of a plurality of adjacent data units to be encapsulated is less than or equal to an AVS3 video code data load capacity of the RTP packet, encapsulating the plurality of data units into one RTP packet.

In an embodiment, in the RTP packet obtained by using the third encapsulation mode, the AVS3 payload header of the RTP packet includes an AVS3 header extension, and information indicated by the AVS3 header extension includes at least one of: a fragmentation type, fragmentation start, and fragmentation end.

In an embodiment, using the third encapsulation mode to encapsulate partial data of one data unit into one RTP packet includes: in a case where a length of one data unit to be encapsulated is greater than an AVS3 video code data load capacity of the RTP packet, encapsulating the data unit into a plurality of RTP packets, wherein each of the plurality of RTP packets contains partial data of the data unit.

In an embodiment, in the RTP packet obtained by using the fourth encapsulation mode, information indicated by an AVS3 common header in the RTP packet includes at least one of: fragmentation indication, fragmentation start, or fragmentation end; or, the AVS3 payload header in the RTP packet includes an AVS3 header extension, and information indicated by the AVS3 header extension includes at least one of: fragmentation indication, fragmentation start, or fragmentation end.

In an embodiment, using the fourth encapsulation mode to encapsulate all data and/or partial data of one or more data units of the same data type into one RTP packet includes: according to an AVS3 video code data load capacity of the RTP packet, encapsulating at least one data unit of the same data type and/or partial data of at least one data unit of the same data type having a length less than the AVS3 video code data load capacity into one RTP packet.

In an embodiment, the plurality of data units are distinguished according to the start codes or according to indication information of a data unit length in the AVS3 payload.

In operation S304, the plurality of RTP packets are sequentially transmitted in an order of encapsulation, that is, the plurality of RTP packets are transmitted in the order of the AVS3 video coding bitstream.

Through the foregoing operations, the AVS3 video coding bitstream is encapsulated into a plurality of RTP packets, so that the AVS3 video coding bitstream can be transmitted in the RTP transmission mode. Therefore, the problem that the AVS3 video coding bitstream needs to support the RTP transmission mode as soon as possible can be solved. Meanwhile, the AVS3 payload header is set in the RTP packet, which can be used to indicate relevant feature information and key information in the AVS3 video coding bitstream, facilitating efficient and real-time transmission of the AVS3 video coding bitstream.

Through the description of the foregoing implementations, those having ordinary skill in the art can clearly understand that the method according to the foregoing embodiment can be implemented by means of software plus a necessary general hardware platform, and certainly can also be implemented by hardware. However, in many cases, the former is a better implementation. Based on such an understanding, the essence of the technical solution of the present disclosure or the part contributing to the existing technology can be embodied in the form of a software product. The computer software product is stored in a storage medium (such as a Read-Only Memory (ROM)/Random Access Memory (RAM), a magnetic disk, an optical disc), and includes several instructions for enabling a terminal device (which may be a mobile phone, a computer, a server, a network device, etc.) to execute the method described in each embodiment of the present disclosure.

In the embodiments of the present disclosure, an apparatus for transmitting an AVS3 video coding bitstream is further provided. The apparatus is used to implement the foregoing embodiments and exemplary implementations, and what has been described will not be repeated. As used below, the term "module" may be a combination of software and/or hardware that implements a predetermined function. Although the apparatus described in the following embodiments is preferably implemented by software, implementation by hardware or a combination of software and hardware is also possible and conceived.

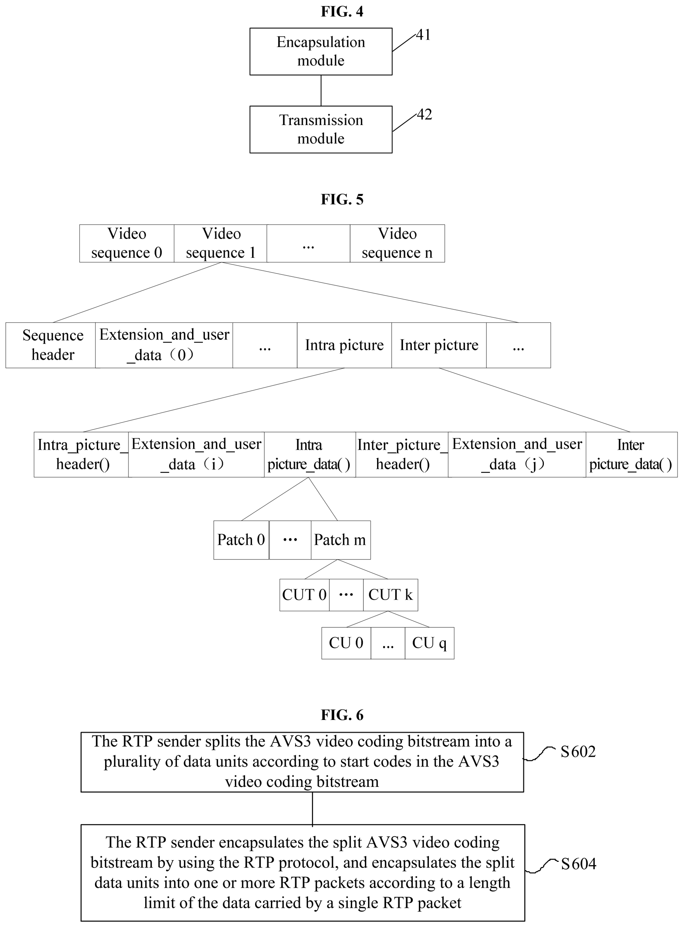

FIG. 4 is a block diagram of a structure of an apparatus for transmitting an AVS3 video coding bitstream according to an embodiment of the present disclosure. As shown in FIG. 4, the apparatus includes:
an encapsulation module 41, configured to encapsulate the AVS3 video coding bitstream into a plurality of RTP packets, wherein each of the plurality of RTP packets is provided with an AVS3 payload header and an AVS3 payload, and the encapsulation module 41 is functionally equivalent to the RTP encapsulation module 12 in the foregoing embodiment; and
a transmission module 42, configured to sequentially transmit the plurality of RTP packets in an order of encapsulation timestamps, wherein the transmission module 42 is functionally equivalent to the RTP transmission module 13 in the foregoing embodiment.

It should be noted that the foregoing modules may be implemented by software or hardware. For the latter, the foregoing modules may be implemented in the following manner, but not limited to: the foregoing modules are all located in the same processor; or the foregoing modules are respectively located in different processors in any combination.

An embodiment of the present disclosure proposes a method for transmitting an AVS3 video coding bitstream based on the RTP protocol. The method is applied to the RTP sender 10 in the network architecture of FIG. 2, and includes the following operations S1 and S2.

In operation S1, collected original video is processed through an AVS3 encoder to obtain an AVS3 video coding bitstream to be transmitted, that is, a bitstream of AVS3 video coding, where the original video may be collected by a camera.

FIG. 5 is a schematic diagram of a structure of an AVS3 video coding bitstream according to an embodiment of the present disclosure. As shown in FIG. 5, the AVS3 video coding bitstream includes one or more (AVS3) video sequences; one video sequence includes an AVS3 video sequence header, one or more user/extension data, one or more intra-frame predicted pictures, and one or more inter-frame predicted pictures.

An intra-frame predicted picture includes an intra-frame predicted picture header, one or more user/extension data, and intra-frame predicted picture data.

An inter-frame predicted picture includes an inter-frame predicted picture header, one or more user/extension data, and inter-frame predicted picture data.

The intra-frame predicted picture data and the inter-frame predicted picture data are respectively composed of one or more patch data (the composition of only the intra-frame predicted picture data is shown as an example in FIG. 5).

In an embodiment, the patch data may be further divided, and the minimum division unit is Coding Unit (CU) data.

In operation S2, the AVS3 video coding bitstream is split and then encapsulated into a plurality of RTP packets, and then the plurality of RTP packets are transmitted through a network.

FIG. 6 is a flowchart of a method for encapsulation and transmission of an AVS3 video coding bitstream based on RTP according to an embodiment of the present disclosure. As shown in FIG. 6, the process includes the following operations S602 and S606.

In operation S602, the RTP sender splits the AVS3 video coding bitstream into a plurality of data units according to start codes in the AVS3 video coding bitstream.

According to the AVS3-P2 standard, in the AVS3 video coding bitstream, each video sequence header, user/extension data, intra-frame predicted picture header, inter-frame predicted picture header, each patch data in the intra-frame predicted picture data, and each patch data in the inter-frame predicted picture data are respectively provided with a start code. The start codes can be used to split data of different data types, that is, the data between one start code and the next start code can be regarded as a data unit of the AVS3 video coding bitstream. The data type corresponding to the data unit can be identified according to the start code (or the start code value in the start code) of each data unit. The start code is composed of a start code prefix and a start code value. The data unit may include the start code or only the start code value obtained by removing the start code prefix from the start code.

In this embodiment, the encoded pictures output by the AVS3 encoder are arranged in the coding bitstream in the order of the coding bitstream, where the encoding order of the coding bitstream is the same as the decoding order of the coding bitstream.

In operation S604, the RTP sender encapsulates the split AVS3 video coding bitstream by using the RTP protocol, and encapsulates the split data units into one or more RTP packets according to a length limit of the data carried by a single RTP packet. According to a length of each data unit, each RTP packet may carry one data unit, a plurality of data units, and/or fragmentations of one or more data units (that is, partial data of the data units).

In this embodiment, when transmitting the AVS3 video coding bitstream through RTP, the structure of the AVS3 video coding bitstream needs to be first split into a plurality of data units, then the data units are encapsulated into a plurality of RTP packets according to the length of the data units and other requirements (such as media processing), etc., and finally transmitted in the form of RTP packets through the network.

In a network system for video transmission, the size of a Maximum Transmission Unit (MTU) is limited. For example, the MTU of Ethernet is 1500 bytes.

For media transmission based on Internet Protocol (IP)/Transmission Control Protocol (TCP)/User Datagram Protocol (UDP), the sum of the length of the RTP packet and the length of the IP header (at least 20 bytes) or the UDP header (8 bytes) should not be greater than the length of the MTU (that is, the size of the MTU). A single RTP packet includes an RTP header (12 bytes) and an RTP payload. The AVS3 video coding bitstream data is actually encapsulated in the RTP payload. Therefore, the AVS3 video coding bitstream data that can be carried in a single RTP packet has a length limit (that is, a size limit). Generally, the maximum length of the RTP payload is 1460 bytes, and in actual transmission examples, the length limit is even smaller than 1460 bytes. In this embodiment, when transmitting the AVS3 video coding bitstream based on the RTP protocol, the split data units are used as the minimum units, and then one or more data units are encapsulated into one RTP packet for transmission. If the length of a single data unit is greater than the length limit of the RTP payload, this data unit needs to be further split into fragmentations smaller than the length limit to ensure that the length of each RTP packet is smaller than the length limit and meets the MTU size in network transmission.

In operation S606, the RTP sender establishes a transmission channel with the RTP receiver, and transmits the RTP packets in an order of encapsulation.

In an embodiment, operations S601 and S602 may be performed simultaneously, that is, when the RTP sender sequentially splits the coding bitstream according to the start codes in the AVS3 video coding bitstream, each time one or more data units are obtained from the split, the one data unit alone may be encapsulated into one RTP packet or the multiple data units may be encapsulated into one RTP packet in combination, and the RTP packet is directly transmitted, and the coding bitstream is continuously split to encapsulate the next RTP packet. If the length of a data unit is greater than the length limit of the data carried by the RTP packet (that is, the data volume that the RTP packet can carry), the data unit is further split into two or more than two fragmentations, and each fragmentation is encapsulated into one RTP packet separately.

In an embodiment, when performing RTP encapsulation according to the data type and data length (that is, the size of the data volume) corresponding to the data unit and the requirements of transmission processing, the following encapsulation principles shall be followed:
1. The coding bitstream order (that is, the bitstream order) of AVS3 video coding is the same as the decoding order. Encapsulation is performed in the coding bitstream order of AVS3 video coding, and transmission is performed in the encapsulation order. If there is no specific decoding order between consecutive multiple data units, encapsulation is performed in the coding bitstream order, such as user data and video data extension data.
2. Parameter-type data units such as sequence headers, user data, and extension data are usually data units with small lengths. If there are no special requirements, the parameter-type data units may be merged into one RTP packet.
3. Under the condition of meeting the requirement of being less than the length limit of the RTP packet, correlated data units should be encapsulated into one RTP packet. For example, data units belonging to the same frame picture (including picture header data) can be encapsulated into one RTP packet if the sum of lengths of these data units is less than the length limit of the RTP packet.
4. Picture frames with small data lengths, such as P-frames and B-frames, may be encapsulated into one RTP packet if the sum of lengths of these picture frames is less than the length limit of the RTP packet, but each of these picture frames should be complete picture data of one frame.

In an embodiment, adjacent RTP packets encapsulated in the order of the AVS3 video coding bitstream may adopt different encapsulation modes. The encapsulation mode of each RTP packet is determined according to the data length, type, or other necessary requirements of the one or more data units to be encapsulated currently.

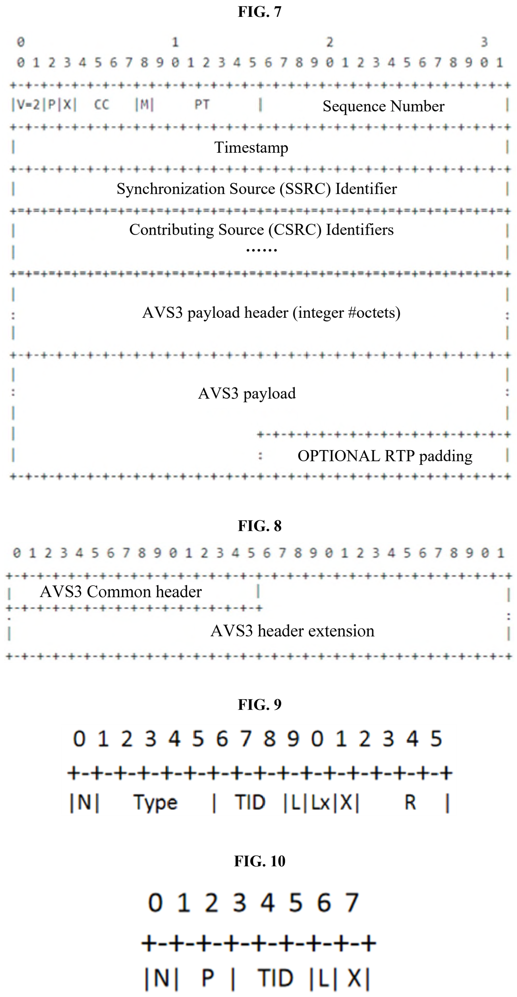

A single RTP packet includes an RTP header and an RTP payload. The RTP payload is used to carry AVS3 video coding bitstream data. The embodiment of the present disclosure also provides basic extension information for RTP to support the transmission of AVS3 video coding bitstreams. As shown in FIG. 7, in the RTP packet encapsulating the AVS3 video payload, the RTP payload after the RTP header includes two parts: an AVS3 payload header and an AVS3 payload.

In an embodiment, the length of the AVS3 payload header is an integer multiple of 8 bits, including an AVS3 common header and an AVS3 header extension. The AVS3 common header has a fixed length, for example, 8 or 16 bytes. The AVS3 header extension is an integer multiple of 8 bits. To ensure that the AVS3 video coding bitstream data carried in the RTP packet is as much as possible, the AVS3 header extension is optional, that is, the AVS3 header extension is used only when the extension indication information or other indication information (such as when Payload_Type is 12 or 13) indicates that extension is required.

IETF RFC 3550 specifies the format of the RTP header. In this embodiment, according to the characteristics of the AVS3 video coding bitstream carried in the RTP packet, AVS3 payload header information is further set on the basis of the common RTP header, as shown in FIG. 7. This facilitates network transmission and processing by the RTP receiving module and the decapsulation module.

Based on the RTP packet with the AVS3 video payload, the setting of the RTP header is as follows:
1. Marker bit (M): 1 bit; used to specify the boundary of a frame. The Marker bit of the last RTP packet of each video frame is set to 1, and the Marker bits of other RTP packets are all set to 0.
2. Payload Type (PT): 7 bits; according to the definition of RFC 3551, the upper-layer application should dynamically allocate a PT value in each RTP session (such as in SDP) and maintain the mapping relationship between the PT value and the payload format. The value range of the PT value should comply with the provisions of RFC 3551 (for example, 97-127).
3. Timestamp: 32 bits; the RTP timestamp is set to be equal to the sampling timestamp of the encoded content, and the clock used is 90000Hz, that is, the time unit of the RTP timestamp is 1/90000s. Like the sequence number, the initial value of the timestamp should also be random. The timestamps of different RTP packets of the same frame picture should be consistent. For payloads without time attributes such as sequence headers, user extension data, and picture headers, the timestamps of these payloads should be consistent with the timestamp of the immediately following picture data.

Other fields (V, P, X, CC, etc.) in the RTP header shall comply with the provisions of IETF RFC 3550.

FIG. 8 is a schematic diagram of an AVS3 payload header according to an embodiment of the present disclosure, and FIG. 9 is a schematic diagram of an AVS3 common header according to an embodiment of the present disclosure. As shown in FIG. 9, the setting of the AVS3 common header in the AVS3 payload header includes:
Discard indication (N): 1 bit, used to indicate whether the AVS3 video coding bitstream data carried by the RTP packet can be discarded (i.e., is allowed to be discarded) during transmission. If discarding the RTP packet does not affect the decoding and content presentation at the decoder, the RTP packet can be discarded (i.e., is allowed to be discarded). Whether the RTP packet can be discarded is determined by the encapsulator. If whether the RTP packet can be discard cannot be clearly determined, the RTP packet shall be indicated as non-discardable.

Temporal Identification (TID): 3 bits, used to indicate which temporal sublayer the payload of the current RTP belongs to, and the value range is 0~7. The TID value indicates the relative importance of the RTP packet. For example, picture frames belonging to a higher temporal sublayer may not be used for decoding picture frames of a lower temporal sublayer. The lower the TID value, the higher the importance, thereby better preventing transmission loss.

Payload Type: 5 bits, used to indicate the type of the AVS3 video coding bitstream data carried in the RTP payload, that is, the data type of the data unit in the coding bitstream. The value and type description of the Payload Type are shown in Table 1:

**Table 1**

| Type | Type Description | Judgment Basis |
|---|---|---|
| 0 | Reserved | |
| 1 | Sequence Header | The start code is B0 |
| 2 | Video Data Extension | The start code is B5 |
| 3 | User Data | The start code is B2 |
| 4 | Video Editing | The start code is B7 |
| 5 | I-Frame Picture Header | The start code is B3 |
| 6 | RL-Frame Picture Header | The start code is B6, and it is a P-frame or B-frame that uses only the library picture as the reference picture for inter-frame prediction decoding |
| 7 | P-Frame Picture Header | The start code is B6 and picture_coding_type = 01 |
| 8 | B-Frame Picture Header | The start code is B6 and picture_coding_type = 10 |
| 9 | I-Frame Patch Data | The start code is 00~7F and the corresponding picture header is an I-Frame Picture Header |
| 10 | P-Frame Patch Data | The start code is 00~7F and the corresponding Picture header is a P-Frame Picture Header |
| 11 | B-Frame Patch Data | The start code is 00~7F and the corresponding Picture header is a B-Frame Picture Header |
| 12 | Combined Encapsulation Data | Multiple start codes exist |
| 13 | Fragmentation Encapsulation Data | The start code value B6 and end code value 8F of the patch data are not in the same RTP packet |
| 14~31 | Undefined | |

Library picture indication (L): 1 bit, used to indicate whether a library picture is encapsulated in the current RTP packet. For example: when the value is 0, it indicates that the current RTP payload is an AVS3 non-library picture; when the value is 1, it indicates that the current RTP payload is an AVS3 library picture.

In an embodiment, when the data carried in the RTP packet is an AVS3 library picture, the RTP packet may carry a library picture header, partial or full library picture data, or a library picture header and library picture data, etc. The specific encapsulation mode is determined by the size of the library picture data.

In an embodiment, the payload type (Payload _Type) can be used to indicate the library picture and related data, that is, the library picture and related data are used as one or more data types. For example, if defining the value of the payload type (Payload_Type) as 14 to represent the library picture, then the library picture indication (L) is not needed.

Library picture extension (Lx): 1 bit, used to indicate whether the AVS3 header extension needs to be used when L is 1, that is, whether to further indicate the relevant information of the carried AVS3 library picture.

Extension indication (X): 1 bit, used to indicate whether other AVS3 header extension is used. For example, when the value is 0, it indicates that the AVS3 header extension is not used; when the value is 1, it indicates that other AVS3 header extension is used.

The extension indication (X) of the AVS3 common header is different from the X field in the RTP header, that is, the information content and purpose of the required extension indicated by the two X fields are different.

In an embodiment, when the value of Payload_Type is 12 and/or 13, it is necessary to use the AVS3 header extension to further indicate information, but if the value of X is 0, the AVS3 header extension may not be used. In other cases where the AVS3 header extension can be extended, if the value of X is 0, it also indicates that the AVS3 header extension is not used.

In an embodiment, the library picture extension (Lx) and the extension indication (X) can be merged, and the extension indication (X) can be directly used. In this usage scenario, the length of the extension indication is at least 2 bits. For example: setting the value to 2 to indicate extending the AVS3 header extension to further indicate the relevant format information of the library picture.

Reserved bits (R): 4 bits, when the field takes a value of 0, the field is ignored.

In an embodiment, for different encapsulation modes, such as when the payload type is 12 or 13, other indication methods can be adopted. For example, a new indication information, that is, an encapsulation type indication (P, 2 bits) may be defined in the AVS3 common header (such as in the reserved bits). When the value is 0, it indicates the single encapsulation mode; when the value is 1, it indicates the combined encapsulation mode; when the value is 2, it indicates the fragmentation encapsulation mode; when the value is 3, it indicates the same-type encapsulation mode. In this indication mode, the length of the AVS3 common header can be further reduced. A schematic structural diagram of the simplified AVS3 common header is shown in FIG. 10.

In an embodiment, according to the length of the data unit and the requirements of media processing and transmission, the RTP packets may be encapsulated using a variety of encapsulation modes, including: single encapsulation mode, combined encapsulation mode, fragmentation encapsulation mode, and same-type encapsulation mode.

An embodiment of the present disclosure provides a single encapsulation mode for encapsulating an AVS3 video coding bitstream. The single encapsulation mode is mainly used when the size of the data unit of the AVS3 coding stream is large or separate encapsulation is necessary for other reasons.

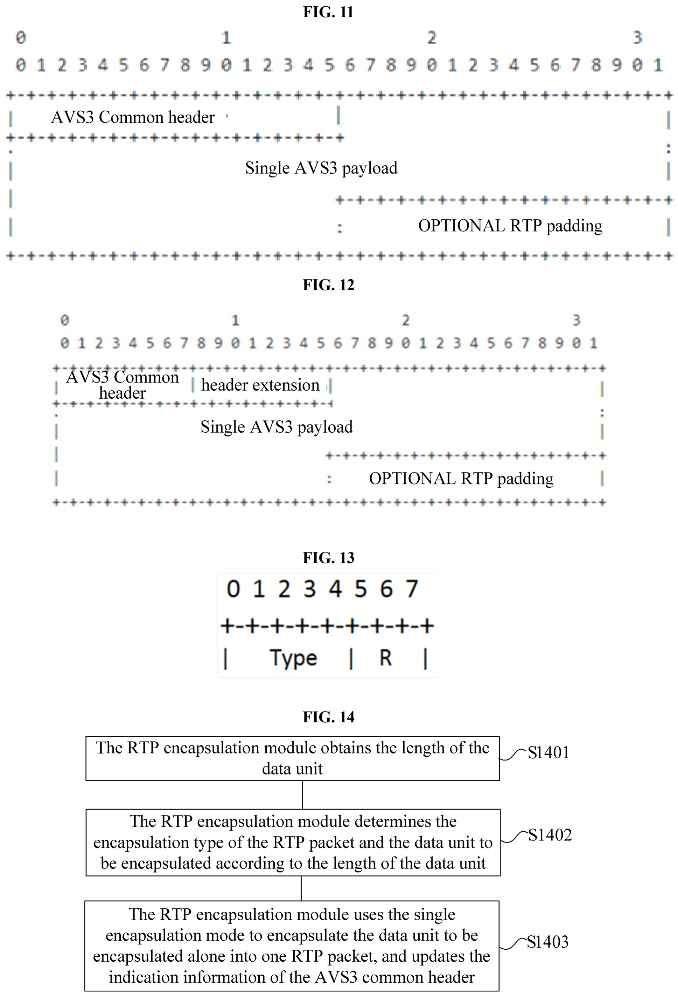

FIG. 11 is a schematic diagram of encapsulation of an RTP packet in a single encapsulation mode according to an embodiment of the present disclosure. In this embodiment, the AVS3 payload contains only one data unit, such as a sequence header, a user data, or patch data of one picture frame. Due to the simple structure, if the AVS3 common header indicates the data type of the data unit, the AVS3 payload includes an AVS3 common header indicating AVS3 video coding information, and does not include an AVS3 header extension. The value range of the Payload_Type of the data type in the AVS3 payload of the RTP packet is 1 to 11, that is, when the value of the Payload_Type is within the foregoing range, it can be identified that the RTP encapsulation adopts the single encapsulation mode, as shown in FIG. 11.

In an embodiment, if the single encapsulation mode indicates the mode of the RTP packet carrying the AVS3 video coding bitstream data through the encapsulation type indication (P), the mode still needs to include the AVS3 header extension. An example structure is shown in FIG. 12.

The AVS3 header extension is used to further indicate the data features in the AVS3 payload in the single encapsulation mode. An example diagram of the header extension is shown in FIG. 13.

In FIG. 13, Payload Type (Type) occupies 5 bits, is used to indicate the type of data carried in the AVS3 payload, and is the same as the type in the Payload _Type. The value range is all values except 12 and 13.

In FIG. 13, Reserved bits (R) occupy 3 bits, when the field takes a value of 0, the field is ignored.

The single encapsulation mode is mainly used when the data volume of the data unit of the AVS3 video coding bitstream is large. If carrying two data units in one RTP packet exceeds the maximum limit of the RTP packet, only the single encapsulation mode can be used to encapsulate the current data unit.

In the single encapsulation mode, encapsulation is performed in the decoding (encoding) order and then transmission is performed.

FIG. 14 is a flowchart of encapsulating an AVS3 video coding bitstream in a single encapsulation mode according to an embodiment of the present disclosure. As shown in FIG. 14, the process includes the following operations S1401 to S1403.

In operation S1401, the RTP encapsulation module obtains the length of the data unit.

In operation S 1402, the RTP encapsulation module determines the encapsulation type of the RTP packet and the data unit to be encapsulated according to the length of the data unit.

In operation S1403, the RTP encapsulation module uses the single encapsulation mode to encapsulate the data unit to be encapsulated alone into one RTP packet, and fills/updates the indication information of the AVS3 common header.

The cases of adopting the single encapsulation mode include one of the following:
When the difference between the AVS3 video code data load capacity of the RTP packet and the data volume of the one data unit to be encapsulated currently is greater than or equal to zero and less than the length of a minimum data unit, the current data unit to be encapsulated is encapsulated alone into one RTP packet, and the indication information of the AVS3 common header is filled/updated. The AVS3 video code data load capacity is the data volume obtained by subtracting the length of the RTP header and the length of the AVS3 common header from the length limit of the data carried by the RTP packet.

When the sum of the data volume of the one data unit to be encapsulated and the data volume of an adjacent data unit is greater than the AVS3 video code data load capacity of the current RTP packet, the data unit is encapsulated alone into one RTP packet, and the indication information of the AVS3 common header is filled/updated.

For example, the AVS3 video code data load capacity of the current RTP packet is K bytes, and the length of the current data unit to be encapsulated (any data unit in the coding bitstream) is J bytes. If K-J is greater than or equal to 0 and less than 8 (or the length of the minimum data unit in the AVS3 video coding bitstream); or, if K-J is greater than 8, the length (L bytes) of the next data unit to be encapsulated (the (n+1)-th) in the coding bitstream order is obtained, if the sum J+L of the lengths of the two data units to be encapsulated is greater than K, the single encapsulation mode is adopted for the data unit. The AVS3 video code data load capacity in the RTP packet is the length limit minus the lengths of the RTP header and the AVS3 common header, and K, J, and L are integers greater than 0.

In an embodiment, according to the requirements of media processing and transmission, if the length of the first data unit to be encapsulated is small, the data units subsequent in the coding bitstream may not be judged, and the data unit is directly encapsulated alone into one RTP packet by using the single encapsulation mode.

In an embodiment, if the data unit needs to be encapsulated alone in one RTP packet by using the single encapsulation mode due to requirements of transmission or media processing, etc., even if the length of the data unit is significantly smaller than the AVS3 video code data load capacity and can be combined and encapsulated with other data units, the single encapsulation mode is still adopted.

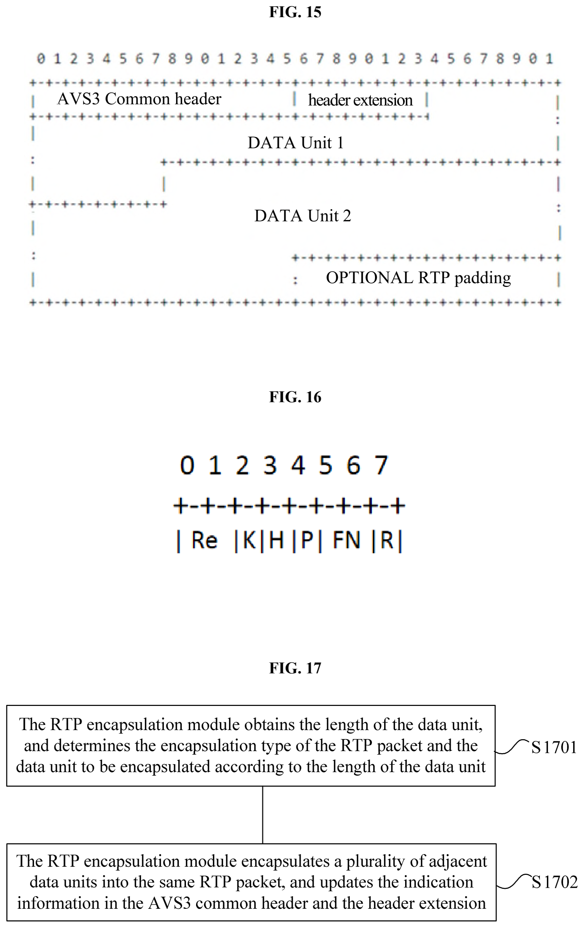

An embodiment of the present disclosure provides a combined encapsulation mode for encapsulating an AVS3 video coding bitstream. FIG. 15 is a schematic diagram of encapsulation of an RTP packet in a combined encapsulation mode according to an embodiment of the present disclosure. In this mode, the AVS3 payload contains two or more data units. Under the condition that the length of the RTP packet does not exceed the length limit, the combined encapsulation mode can be applied to any data type in the order of the AVS3 video coding bitstream and meeting the encapsulation rules. For example: encapsulating a plurality of data units of the data type of video data extension in the RTP packet, or encapsulating a picture header of one picture frame and one or more complete patch data corresponding to the picture frame, or encapsulating a plurality of patch data of one picture frame, etc. The value range of the data type Payload_Type of the AVS3 payload in the RTP packet is 12, or the encapsulation type indication (P) is 1.

In the case of combined encapsulation, the payload header of AVS3 includes an AVS3 common header and an AVS3 header extension. The AVS3 header extension is used to further indicate the data features in the AVS3 payload in the combined encapsulation mode. The structure of the AVS3 common header is the same as that of the AVS3 common header in the foregoing embodiment, which can be referred to FIG. 9. An example diagram of the AVS3 header extension is shown in FIG. 16. The information of the header extension includes:
Reference frame picture indication (Re): 2 bits, used to indicate whether the data unit actually contained in the AVS3 payload is related to the reference picture frame, such as the parameter header of an I-frame, the patch data of an I-frame, a library picture, etc.

Key parameter indication (K): 1 bit, used to indicate whether the data unit actually contained in the AVS3 payload includes a parameter set necessary for decoding, such as sequence header parameters.

Heterogeneous data indication (H): 1 bit, used to indicate whether the data units contained in the AVS3 payload are of different data types. An example of heterogeneous data is aggregating user data or video data extension data, picture header data of a picture frame, and patch data at the same time. If the value of the heterogeneous data indication is 0, it may indicate that the RTP payload aggregates a plurality of patch data of one frame.

Patch data indication (P): 1 bit, used to indicate whether the data unit actually contained in the AVS3 payload has patch data. If the heterogeneous data indication (H) is used to represent the existence of patch data, the patch indication information may not be used.

Number of picture frames (FN): 2 bits, used to indicate whether the data unit actually contained in the AVS3 payload includes picture headers and complete picture data of multiple frame pictures.

In an embodiment, each frame picture has a time stamp. When multiple frame pictures are encapsulated in one RTP packet, based on the number of picture frames, the time compensation of each frame picture can be calculated or indicated to obtain the time stamps of all picture frames in the RTP packet. For example, in the RTP packet, if the time stamp in the RTP header is the time stamp of the first picture frame in the RTP packet, then, starting from the second frame picture in the RTP packet, time compensation information (usually 8 bits in length) can be added before the header of each frame picture (except the first frame of the RTP packet); or, time compensation extension information (8 bits multiplied by FN-1 in length) can be added after the AVS3 header extension to sequentially describe the time compensation of each of the FN-1 frame pictures except the first frame picture in the RTP packet.

Reserved bits (R): 2 bits, when the field takes a value of 0, the field is ignored.

In an embodiment, in this encapsulation mode, if multiple frame pictures are encapsulated, the data of the encapsulated frame pictures is complete data, that is, the complete data of multiple frame pictures and partial data of one or more frame pictures (which may include multiple data units) are usually not placed in one combined packet.

FIG. 17 is a flowchart of encapsulating an AVS3 video coding bitstream in a combined encapsulation mode according to an embodiment of the present disclosure. As shown in FIG. 17, the process includes the following operations S1701 and S1702.

In operation S1701, the RTP encapsulation module obtains the length of the data unit, and determines the encapsulation type of the RTP packet and the data unit to be encapsulated according to the length of the data unit.

In operation S1702, the RTP encapsulation module encapsulates a plurality of adjacent data units into the same RTP packet, and fills/updates the indication information in the AVS3 common header and the header extension.

When the following conditions are met, a plurality of data units are encapsulated into the same RTP packet:
When the difference between the AVS3 video code data load capacity of the RTP packet and the sum of the data volumes of a plurality of adjacent data units to be encapsulated is equal to 0 or less than the length of the minimum data unit, these data units are encapsulated into the same RTP packet. The AVS3 video code data load capacity of the RTP packet is the data volume obtained by subtracting the lengths of the RTP header, the AVS3 common header, and the AVS3 header extension from the length limit of the data carried by the RTP packet.

For example, the AVS3 video code data load capacity of the current RTP packet is H bytes. At this time, the AVS3 video code data load capacity of the current RTP packet is the length limit of the data carried by the RTP packet minus the sum of the lengths of the RTP header and the AVS3 common header. The length of the current data unit (the n-th) to be encapsulated is W bytes. If W is at least greater than 8 or greater than the length of the minimum data unit in the AVS3 video coding bitstream, the length of the next ((n+1)-th) data unit to be encapsulated is obtained in the coding bitstream order. For example, the length of the (n+1)-th data unit to be encapsulated is V bytes. Then, the sum of the lengths of the n-th and (n+1)-th data units to be encapsulated is W+V. The AVS3 video code data load capacity of the RTP packet is H' bytes. At this time, the AVS3 video code data load capacity of the RTP packet is the length limit minus the sum of the lengths of the RTP header, the AVS3 common header, and the AVS3 header extension. If H'-(W+V) is less than 8 or less than the length of the minimum data unit in the AVS3 video coding bitstream and greater than or equal to 0, it may be determined that the RTP packet adopts the combined encapsulation mode, and the above two data units may be encapsulated into the same RTP packet.

If H'-(W+V) is still greater than (or the length of the minimum data unit in the AVS3 video coding bitstream), it may be determined that the RTP packet adopts the combined encapsulation mode, and i (greater than or equal to 1) subsequent data units to be encapsulated continues to be obtained in the coding bitstream order until the difference between the AVS3 video code data load capacity (H' bytes) of the RTP packet and the sum of the lengths of all the obtained data units to be encapsulated (a total of i+2) is less than 8 (or the length of the minimum data unit in the AVS3 video coding bitstream) and greater than or equal to 0, then the above i+2 data units are encapsulated into the same RTP packet; or, if the difference between the AVS3 video code data load capacity (H' bytes) of the current RTP packet and the sum of the lengths of the i+2 data units to be encapsulated is still greater than 8 (or the length of the minimum data unit in the AVS3 video coding bitstream), but the sum of the lengths after adding the length of one more data unit (the (n+2+i)-th) is greater than H', then the above i+2 data units are encapsulated into the same RTP packet.

In an embodiment, according to the requirements of media processing and transmission, if the sum of the lengths of a plurality of data units to be encapsulated is still small, the RTP packet may continue to encapsulate other data units, or the plurality of data units to be encapsulated are directly encapsulated into the same RTP packet without judging the subsequent data units in the coding bitstream.

In an embodiment, in combined encapsulation, the association relationship between data units needs to be considered. This can improve media processing capabilities and reduce the overhead caused by packet loss of associated data units. If two adjacent data units are completely irrelevant, or the latter data unit among the adjacent data units has a stronger association relationship with the data units subsequent to this data unit, the latter data unit can be encapsulated into the next RTP packet together with the data units subsequent to this data unit.

In an embodiment, in combined encapsulation, to further indicate the decoding order of each data unit, a Decoding Order Number (DON) is added before the start code of each data unit in the AVS3 payload, and the length of the DON indication information is at least 4 bits.

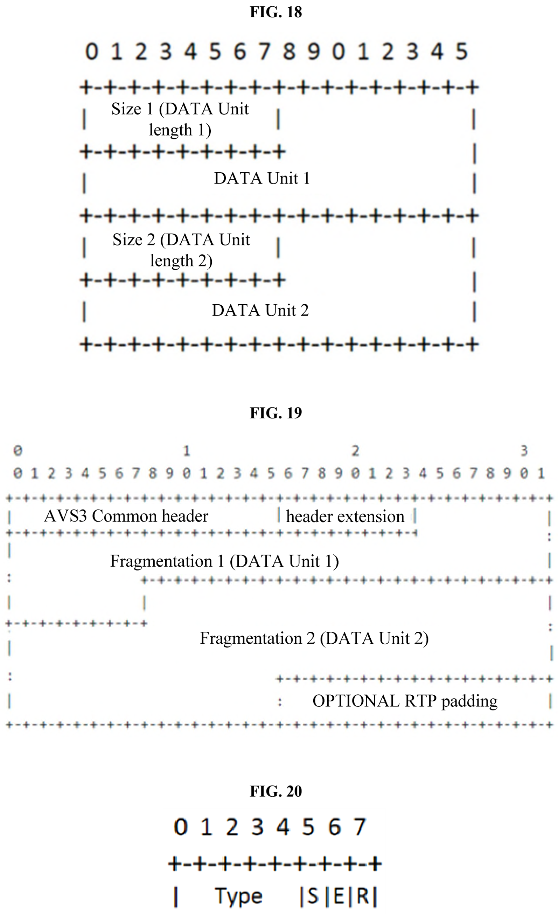

In an embodiment, in combined encapsulation, to further increase the AVS3 coding stream data carried in the AVS3 payload part, the prefix in the start code can be removed, and only the start code value is retained. For example, the intra-frame predicted picture header is "0x000001B3", the prefix is "0x000001", and the start code value is "B3". If the start code prefix is removed, to better distinguish each data unit in one RTP packet, a data unit length indication (Size) needs to be added before each data unit, and the Size indication length is at least 8 bits. As shown in FIG. 18.

An embodiment of the present disclosure provides a fragmentation encapsulation mode for encapsulating an AVS3 video coding bitstream. FIG. 19 is a schematic diagram of encapsulation of an RTP packet in a fragmentation encapsulation mode according to an embodiment of the present disclosure. In this mode, the data volume of one data unit in the AVS3 video coding bitstream is greater than the length limit of the data carried by one RTP packet. At this time, it is necessary to split a single data unit into two or more fragmentations, and then encapsulate the respective fragmentations into two or more RTP packets separately.

According to the structure of the AVS3 video coding bitstream, the fragmentation encapsulation mode is suitable for the case where the data volume of a single patch data in a picture frame (such as an I-frame) is large.

In the case of fragmentation encapsulation, the payload header of AVS3 includes an AVS3 common header and an AVS3 header extension. The AVS3 header extension is used to further indicate the data features of the coding unit in the AVS3 payload in the fragmentation encapsulation mode. The structure of the AVS3 common header is the same as that of the AVS3 common header in the foregoing embodiment, which can be referred to FIG. 9. An example diagram of the header extension is shown in FIG. 20.

The information of the header extension includes:
Fragmentation type (Type): 5 bits, used to indicate the type of fragmentation data carried in the AVS3 payload, which is the same as the type in the Payload_Type, and the value range is all values except 12 and 13.

Fragmentation start (S): 1 bit, used to indicate whether the fragmentation data carried in the AVS3 payload includes the start fragmentation in the patch data.

Fragmentation end (E): 1 bit, used to indicate whether the fragmentation data carried in the AVS3 payload includes the end fragmentation in the patch data.

Reserved (R): 1 bit, when the field takes a value of 0, the field is ignored.

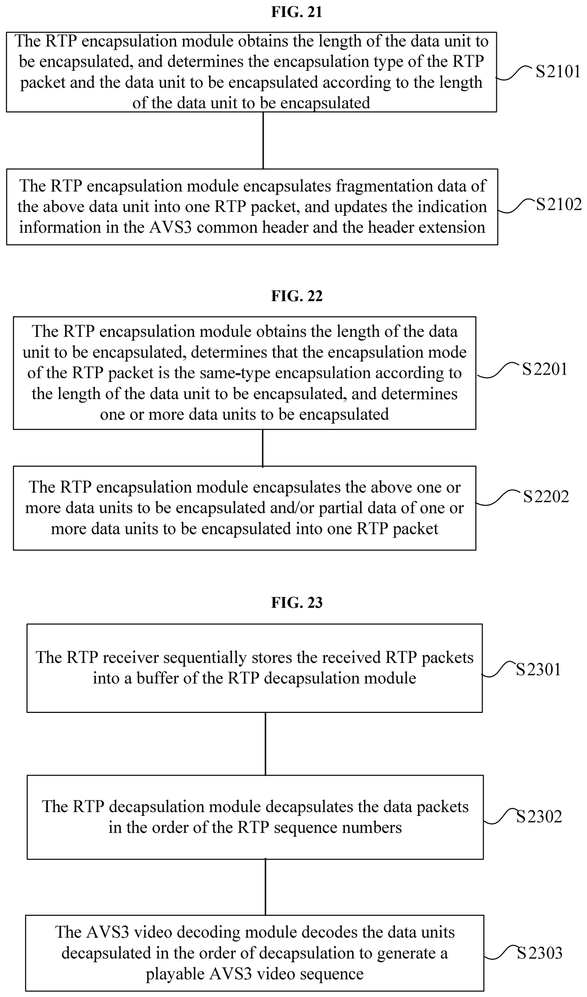

In the fragmentation encapsulation mode, the patch data is split and encapsulated in the coding bitstream order of the specific coding data. FIG. 21 is a flowchart of encapsulating an AVS3 video coding bitstream in a fragmentation encapsulation mode according to an embodiment of the present disclosure. As shown in FIG. 21, the encapsulation process includes the following operations S2101 and S2102.

In operation S2101, the RTP encapsulation module obtains the length of the data unit to be encapsulated, and determines the encapsulation type of the RTP packet and the data unit to be encapsulated according to the length of the data unit to be encapsulated.

In operation S2102, the RTP encapsulation module encapsulates fragmentation data of the above data unit into one RTP packet, and fills/updates the indication information in the AVS3 common header and the header extension.

When the length of the data unit to be encapsulated meets the following conditions, the fragmentation data of the data unit is encapsulated into one RTP packet:
When the AVS3 video code data load capacity of the RTP packet is less than the length of the data unit to be encapsulated, the fragmentation encapsulation mode is adopted to encapsulate the fragmentation data (partial data) of the data unit to be encapsulated into one RTP packet. The AVS3 video code data load capacity of the RTP packet is the data volume obtained by subtracting the lengths of the RTP header, the AVS3 common header, and the AVS3 header extension from the length limit of the data carried by the RTP packet.

For example, the AVS3 video code data load capacity of the current RTP packet is Q bytes, which is equal to the length limit of the data carried by the RTP packet minus the lengths of the RTP header and the AVS3 common header. The length of the current data unit to be encapsulated is R bytes. If R is greater than Q, the fragmentation encapsulation mode is adopted. Partial data (that is, fragmentation data) in the data unit is split and selected in the coding bitstream order and encapsulated into one RTP packet. The data length of the partial data is less than or equal to Q minus the length of the AVS3 header extension, At this time, the AVS3 video code data load capacity of the RTP is Q' bytes, that is, the data volume obtained by subtracting the lengths of the RTP header, the AVS3 common header, and the AVS3 header extension from the length limit of the data carried by the RTP packet.

In an embodiment, if the minimum coding unit CU of the patch data in the AVS3 video coding bitstream can be distinguished in the coding bitstream order, the data unit of the data type of patch data can be split according to the minimum coding unit CU. The splitting process is the same as the above operation S2101, and it is necessary to ensure that the length of one or more minimum coding unit CUs in the encapsulated patch data is less than the AVS3 video code data length limit of the RTP packet.

In an embodiment, in the fragmentation encapsulation mode, fragmentations of two different data units cannot be encapsulated into one RTP packet.

An embodiment of the present disclosure also provides a same-type encapsulation mode, in which data units of the same type or fragmentations of data units of the same type are encapsulated into one RTP packet.

In this encapsulation mode, the value range of the payload type (Payload _Type) is 1 to 11. Meanwhile, the reserved bits in the AVS3 common header or a new AVS3 header extension are used to add the following indication information:
Fragmentation indication (F): 1 bit, used to indicate whether the RTP packet contains fragmentations of patch data. For example, when the value is 0, it indicates that no fragmentations are contained; when the value is 1, it indicates that fragmentations are contained.

Fragmentation start (S): 1 bit, used to indicate whether the fragmentation data carried in the AVS3 payload includes the start fragmentation in the patch data.

Fragmentation end (E): 1 bit, used to indicate whether the fragmentation data carried in the AVS3 payload includes the end fragmentation in the patch data.

When the fragmentation indication is 0, it indicates that there are no data unit fragmentations in the RTP packet, and S and E can be ignored.

In an embodiment, the same-type encapsulation mode can support encapsulating two or more data units of the same type and data unit fragmentations into one RTP packet. For example, for data units A and B of the patch data of an I-frame, the RTP packet may contain fragmentation data of data unit A (including the end fragmentation) and fragmentation data of B (including the start fragmentation). At this time, the fragmentation indication F is 1, and both the fragmentation start (S) and the fragmentation end (E) are 1.

In an embodiment, if the same-type encapsulation mode is used, there is no need to use the single encapsulation mode and the fragmentation encapsulation mode at the same time. If the combined encapsulation mode is used at the same time, only a plurality of data units of different types are encapsulated by using the combined encapsulation mode, such as encapsulating user data and video data extension data into one RTP packet, and data units of the same type are encapsulated by using the same-type encapsulation mode. Further, data units of the data type of video data extension data may be regarded as data units of different types because the video extension ID (extension_id) in the AVS3 video coding bitstream is different, so the same-type encapsulation mode may not be adopted for RTP encapsulation, but the combined encapsulation mode is adopted.

FIG. 22 is a flowchart of encapsulating an AVS3 video coding bitstream in a same-type encapsulation mode according to an embodiment of the present disclosure. As shown in FIG. 22, the encapsulation process includes the following operations S2201 and S2202.

In operation S2201, the RTP encapsulation module obtains the length of the data unit to be encapsulated, determines that the encapsulation mode of the RTP packet is the same-type encapsulation according to the length of the data unit to be encapsulated, and determines one or more data units to be encapsulated.

In operation S2202, the RTP encapsulation module encapsulates the above one or more data units to be encapsulated and/or partial data of one or more data units to be encapsulated into one RTP packet, and fills/updates the corresponding indication information in the AVS3 common header and/or the AVS3 header extension.

When the following conditions are met, the one or more data units to be encapsulated and/or partial data of one or more data units to be encapsulated are encapsulated into one RTP packet:
The AVS3 video code data load capacity (Z bytes) of the current RTP packet is equal to the length limit of the RTP packet minus the sum of the lengths of the RTP header and the AVS3 common header. The length of the current data unit to be encapsulated is R bytes. If R is greater than Z, the same-type encapsulation mode is adopted; if R is less than Z, and the next one or more data units to be encapsulated are of the same data type as the current encapsulated data unit, the same-type encapsulation mode is adopted.

If R is greater than Z, the data unit to be encapsulated is split into fragmentations smaller than Z; or, if the sum of the lengths of one or more data units to be encapsulated is equal to or less than Z; or, if the sum of the lengths of one or more data units to be encapsulated and the lengths of partial data of one or more data units to be encapsulated is equal to or less than Z, the flow proceeds to operation S2202.

An embodiment of the present disclosure also provides a method for the RTP receiver to perform reverse decapsulation and decoding after receiving the RTP packets. The method is applied to the RTP receiver 20 in the network architecture of FIG. 2. FIG. 23 is a flowchart of a method for decoding RTP packets according to an embodiment of the present disclosure. As shown in FIG. 23, the basic process includes the following operations S2301 to S2303.

In operation S2301, the RTP receiver sequentially stores the received RTP packets into a buffer of the RTP decapsulation module.

In operation S2302, the RTP decapsulation module decapsulates the data packets in the order of the RTP sequence numbers. If the RTP packet encapsulates one or more data units, the RTP packet is directly transmitted to the AVS3 video decoding module. If the RTP packet encapsulates a fragmentation of one data unit, all fragmentations of the data unit are concatenated in the order of decapsulation and then transmitted to the AVS3 video decoding module.

In operation S2303, the AVS3 video decoding module decodes the data units decapsulated in the order of decapsulation to generate a playable AVS3 video sequence.

In the method and apparatus for transmitting AVS3 video coding based on the RTP protocol proposed in the above embodiments of the present disclosure, the RTP protocol can be extended with reference to the AVS3 video coding features to provide a flexible encapsulation format for the AVS3 video coding bitstream. Through the combination of the AVS3 common header and the optional header extension, the data is segmented according to different start codes in the AVS3 video coding bitstream. According to the block/fragmentation size of each frame of video, the size limit of the data carried by the RTP packet is fully considered, and single encapsulation, combined encapsulation, fragmentation encapsulation, and same-type encapsulation are performed, which improves the encapsulation efficiency and realizes real-time transmission.

An embodiment of the present disclosure also provides a computer-readable storage medium, where a computer program is stored in the computer-readable storage medium, and the computer program, when running on a processor, is configured to implement the operations in any one of the foregoing method embodiments.

In an exemplary embodiment, the foregoing computer-readable storage medium may include but is not limited to: a Universal Serial Bus (USB) flash drive, a Read-Only Memory (ROM), a Random Access Memory (RAM), a mobile hard disk, a magnetic disk, or an optical disc, etc., which can store computer programs.

An embodiment of the present disclosure also provides an electronic device, including a memory and a processor, where a computer program is stored in the memory, and the processor is set to run the computer program to implement the operations in any one of the foregoing method embodiments.

In an exemplary embodiment, the foregoing electronic device may further include a transmission device and an input/output device, where the transmission device is connected to the processor, and the input/output device is connected to the processor.

Specific examples in this embodiment may refer to the examples described in the foregoing embodiments and exemplary implementations, and this embodiment will not be repeated here.

Obviously, those having ordinary skill in the art should understand that each module or each operation of the present disclosure described above can be implemented by a general computing device. They can be concentrated on a single computing device, or distributed on a network composed of a plurality of computing devices. They can be implemented by program codes executable by a computing device, so that they can be stored in a storage device for execution by a computing device. In some cases, the operations shown or described can be executed in an order different from that here, or they can be respectively made into various integrated circuit modules, or multiple modules or operations among them can be made into a single integrated circuit module for implementation. Thus, the present disclosure is not limited to any specific combination of hardware and software.

The above descriptions are only exemplary embodiments of the present disclosure and are not intended to limit the present disclosure. For those having ordinary skill in the art, the present disclosure may have various modifications and changes. Any modifications, equivalent substitutions, improvements, etc., made within the principle of the present disclosure shall be included in the protection scope of the present disclosure.

## Claims

1. A method for transmitting a third-generation Audio Video Coding Standard Workgroup of China, AVS3, video coding bitstream, comprising:
encapsulating the AVS3 video coding bitstream into a plurality of Real-time Transport Protocol, RTP, packets, wherein each of the plurality of RTP packets is provided with an AVS3 payload header and an AVS3 payload; and
sequentially transmitting the plurality of RTP packets in an order of encapsulation.

2. The method according to claim 1, wherein encapsulating the AVS3 video coding bitstream into the plurality of RTP packets comprises:
dividing the AVS3 video coding bitstream into a plurality of data units according to start codes in the AVS3 video coding bitstream; and
encapsulating the plurality of data units into the plurality of RTP packets, wherein each of the plurality of RTP packets carries one data unit, a plurality of data units, and/or partial data of one or more data units.

3. The method according to claim 2, wherein encapsulating the plurality of data units into the plurality of RTP packets comprises at least one of:
using a first encapsulation mode to encapsulate one data unit into one RTP packet;
using a second encapsulation mode to encapsulate a plurality of data units of a same data type or of different data types into one RTP packet;
using a third encapsulation mode to encapsulate partial data of one data unit into one RTP packet;
using a fourth encapsulation mode to encapsulate all data and/or partial data of one or more data units of the same data type into one RTP packet.

4. The method according to claim 3, wherein the AVS3 payload header comprises an AVS3 common header, and information indicated by the AVS3 common header comprises at least one of: discard indication, temporal Identification, ID, a payload type, library picture indication, library picture extension, extension indication, or encapsulation type indication.

5. The method according to claim 3 or 4, wherein in the RTP packet obtained by using the first encapsulation mode, the AVS3 payload header of the RTP packet comprises an AVS3 header extension, and information indicated by the AVS3 header extension is a payload type.

6. The method according to claim 3 or 4, wherein using the first encapsulation mode to encapsulate one data unit into one RTP packet comprises:
in a case where a length of one data unit to be encapsulated is less than or equal to an AVS3 video code data load capacity of the RTP packet, encapsulating the data unit alone into one RTP packet.

7. The method according to claim 3 or 4, wherein in the RTP packet obtained by using the second encapsulation mode, the AVS3 payload header of the RTP packet comprises an AVS3 header extension, and information indicated by the AVS3 header extension comprises at least one of: reference frame picture indication, key parameter indication, heterogeneous data indication, patch data indication, and the number of picture frames.

8. The method according to claim 7, wherein using the second encapsulation mode to encapsulate the plurality of data units of the same data type or of different data types into one RTP packet comprises:
in a case where a sum of lengths of a plurality of adjacent data units to be encapsulated is less than or equal to an AVS3 video code data load capacity of the RTP packet, encapsulating the plurality of data units into one RTP packet.

9. The method according to claim 3 or 4, wherein in the RTP packet obtained by using the third encapsulation mode, the AVS3 payload header of the RTP packet comprises an AVS3 header extension, and information indicated by the AVS3 header extension comprises at least one of: a fragmentation type, fragmentation start, and fragmentation end.

10. The method according to claim 9, wherein using the third encapsulation mode to encapsulate partial data of one data unit into one RTP packet comprises:
in a case where a length of one data unit to be encapsulated is greater than an AVS3 video code data load capacity of the RTP packet, encapsulating the data unit into a plurality of RTP packets, wherein each of the plurality of RTP packets contains partial data of the data unit.

11. The method according to claim 3 or 4, wherein in the RTP packet obtained by using the fourth encapsulation mode, information indicated by an AVS3 common header in the RTP packet comprises at least one of: fragmentation indication, fragmentation start, or fragmentation end; or, the AVS3 payload header in the RTP packet comprises an AVS3 header extension, and information indicated by the AVS3 header extension comprises at least one of: fragmentation indication, fragmentation start, or fragmentation end.

12. The method according to claim 3, wherein using the fourth encapsulation mode to encapsulate all data and/or partial data of one or more data units of the same data type into one RTP packet comprises:
according to an AVS3 video code data load capacity of the RTP packet, encapsulating at least one data unit of the same data type and/or partial data of at least one data unit of the same data type having a length less than the AVS3 video code data load capacity into one RTP packet.

13. The method according to claim 2, wherein the plurality of data units are distinguished according to the start codes or according to indication information of a data unit length in the AVS3 payload.

14. An apparatus for transmitting a third-generation Audio Video Coding Standard Workgroup of China, AVS3, video coding bitstream, comprising:
an encapsulation module, configured to encapsulate the AVS3 video coding bitstream into a plurality of Real-time Transport Protocol, RTP, packets, wherein each of the plurality of RTP packets is provided with an AVS3 payload header and an AVS3 payload; and
a transmission module, configured to sequentially transmit the plurality of RTP packets in an order of encapsulation.

15. A computer-readable storage medium, wherein a computer program is stored in the computer-readable storage medium, and the computer program, when executed by a processor, causes the processor to implement operations of the method according to any one of claims 1 to 13.

16. An electronic device, comprising a memory, a processor, and a computer program stored on the memory and executable on the processor, wherein the processor, when executing the computer program, implements operations of the method according to any one of claims 1 to 13.
